(19) Europäisches Patentamt
European Patent Office
Office européen des brevets

(11) **EP 2 748 041 B1**

(12) **EUROPÄISCHE PATENTSCHRIFT**

(45) Veröffentlichungstag und Bekanntmachung des Hinweises auf die Patenterteilung:
**21.02.2018 Patentblatt 2018/08**

(21) Anmeldenummer: **12726748.2**

(22) Anmeldetag: **09.06.2012**

(51) Int Cl.:
***B60T 8/1766*** (2006.01)

(86) Internationale Anmeldenummer:
**PCT/EP2012/002449**

(87) Internationale Veröffentlichungsnummer:
**WO 2013/026503 (28.02.2013 Gazette 2013/09)**

(54) **VERFAHREN UND STEUEREINRICHTUNG ZUM STEUERN ODER REGELN EINES FAHRZEUGBREMSSYSTEMS**

METHOD AND CONTROL DEVICE FOR CARRYING OUT OPEN-LOOP OR CLOSED-LOOP CONTROL OF A VEHICLE BRAKE SYSTEM

PROCÉDÉ ET DISPOSITIF DE COMMANDE PERMETTANT DE COMMANDER OU DE RÉGULER UN SYSTÈME DE FREINAGE D'UN VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.08.2011 DE 102011111592**

(43) Veröffentlichungstag der Anmeldung:
**02.07.2014 Patentblatt 2014/27**

(73) Patentinhaber: **WABCO GmbH**
**30453 Hannover (DE)**

(72) Erfinder:
• **ECKERT, Horst**
  **31547 Rehburg-Loccum (DE)**
• **GAULKE, Arnd**
  **30974 Wennigsen (DE)**

(74) Vertreter: **Lauerwald, Jörg**
  **Wabco GmbH**
  **Am Lindener Hafen 21**
  **30453 Hannover (DE)**

(56) Entgegenhaltungen:
**DE-A1- 10 163 678    DE-C1- 4 326 256**

EP 2 748 041 B1

**Beschreibung**

Die Erfindung betrifft ein Verfahren zum Steuern oder Regeln eines Fahrzeug-Bremssystems und eine Steuereinrichtung zur Durchführung eines derartigen Verfahrens.

Die DE 10 2008 032 544 A1 schlägt vor, Bremskräfte an den Rädern bzw. Achsen in Abhängigkeit der Temperatur der jeweiligen Bremse und der Schlupfwerte einzustellen. Somit erfolgt eine Bremskraftverteilung auf Grundlage der Schlupfwerte, d. h. eine Adhäsions-Regelung.

Für Bremssysteme von Nutzfahrzeugen sind unterschiedliche Regelungen bekannt. Schlupfregelungen wie ABS und ASR dienen dazu, ein Blockieren der abgebremsten und ein Durchdrehen der angetriebenen Räder zu verhindern bzw. zu regeln. Fahrstabilitätsregelungen wie ESP und Rollverhinderungs-Funktionen dienen zum Verhindern eines Schleuderns und Rollens (seitliches Überschlagen) des Fahrzeugs. Längsregelungen wie Tempomatfunktionen (CC, Cruise Control) und Abstands-Regelungen an ein vorausfahrendes Fahrzeug (ACC, Adaptive Cruise Control) betreffen die Anpassung an weitere Verkehrsteilnehmer. Weiterhin sind Bremsbelagverschleiß-Regelungen bekannt, um einen möglichst gleichmäßigen BremsbelagVerschleiß an den unterschiedlichen Rädern bzw. Achsen zu erreichen.

Bei einer Bremsanforderung durch den Fahrer oder eines der Stabilitätsprogramme kann der ermittelte Gesamtbremsdruck oder die ermittelte Gesamtbremskraft unterschiedlich auf die Achsen des Fahrzeugs verteilt werden. Diese Bremsdruckverteilung bzw. Bremskraftverteilung wird insbesondere achsabhängig durchgeführt, um die verschiedenen Achslasten zu berücksichtigen, da eine hohe Achslast eine höhere Traktion und bessere Übertragung der Bremskraft auf die Fahrbahn ermöglicht. Somit soll bei derartigen adhäsionsgerechten Bremskraftverteilungen (BKV) bzw. Bremsdruckverteilungen (DV- bzw. phi) verhindert werden, dass die eingebremsten Achsen mit geringeren Achslasten zu schnell blockieren. Nachteilhaft ist ein höherer Bremsbelagverschleiß an den Achsen, die eine höhere Achslast aufweisen und daher bei den adhäsionsgerechten Bremskraft- bzw. Bremsdruckverteilungen eine höhere Bremskraft bzw. Bremsdruck zugeteilt bekommen.

Bei Durchführung von Bremsbelagverschleiß-Regelungen kann hingegen ein häufigeres Blockieren der mit hohem Bremsdruck angesteuerten Achse mit geringerer Achslast erfolgen; beispielsweise ist diese Achse mit Blockierneigung bei Bussen im Allgemeinen die Vorderachse des Fahrzeugs, deren Blockieren von dem Fahrer und den Passagieren als unangenehm empfunden werden kann; bei leeren Lastkraftwagen (Lkw) und solo fahrenden Sattelzugmaschinen (Szm) ist diese Achse mit Blockierneigung im Allgemeinen die Hinterachse des Fahrzeugs; hierbei ist auch die Fahrstabilität beeinträchtigt.

Die DE 43 26 256 C1 schlägt ein Verfahren zur Bestimmung einer verschleißabhängigen Bremskraftverteilung vor, die bevorzugt die bei Fahrtantritt ermittelte Bremskraftverteilung für die gesamte Fahrt beibehält. Die Bremskräfte werden dabei stets derart verteilt, dass der Verschleiß der Bremsen optimal verteilt wird. Nur wenn ein erhöhter Schlupf eines Rades oder eine Verzögerung des Fahrzeugs oberhalb eines Schwellwerts erfasst, wird auf eine adhäsionsoptimiere Bremskraftverteilung umgestellt. Bei geringen Haftwerten z. B. bei winterlichen Bedingungen führt dies jedoch dazu, dass bei jedem Bremsvorgang erneut ein erhöhter Schlupf auftritt, dieses führt zu Fahrinstabilitäten mit ABS-Regelungen und somit auch zu Komforteinbußen und erhöhtem Reifenverschleiß.

Die DE 101 63 678 A1 offenbart Verfahren zur Ermittlung der Griffigkeit von Verkehrsflächen, indem Bewegungsdaten eines Fahrzeugs bei einem Bremsvorgang ermittelt werden.

Weiterhin sind Messungen der Umgebungsbedingungen bekannt, z. B. aus der DE 10 2004 018 088 A1, DE 10 2007 060 858 A1, EP 1 635 163 A2 und DE 101 26 459 C1.

Der Erfindung liegt die Aufgabe zugrunde, ein Verfahren zum Steuern oder Regeln eines Bremssystems und eine entsprechende Steuereinrichtung zu schaffen, die einen sicheren Betrieb des Bremssystems bei günstiger Verteilung des Bremsbelagverschleißes ermöglichen.

Diese Aufgabe wird durch ein Verfahren nach Anspruch 1 und einer Steuereinrichtung nach Anspruch 13 gelöst. Die Unteransprüche beschreiben bevorzugte Weiterbildungen.
Der Erfindung liegt der Gedanke zugrunde, vor Einleitung einer Bremsung jeweils aktuell zu entscheiden, ob eine zwischenachsige Bremskraftverteilung oder Bremsdruckverteilung erfolgen soll

a) auf Grundlage einer Bremsbelagverschleiß-Druckverteilung, d. h. zum Harmonisieren bzw. Vergleichmäßigen des Bremsbelagverschleißes an den verschiedenen Achsen bzw. Rädern, oder
b) auf Grundlage einer Reibschluss-Druckverteilung, d.h. insbesondere als adhäsionsorientierte Bremsdruckverteilung (Bremskraftverteilung), oder vorzugsweise auch als dritter Möglichkeit
c) auf Grundlage sowohl der Bremsbelagverschleiß-Druckverteilung als auch der Reibschluss-Druckverteilung.

Unter dem Begriff "Einleitung einer Bremsung" wird hierbei die Druckbeaufschlagung der bis dahin nicht betätigten Bremsen verstanden. Somit wird unter dem Begriff "vor Einleitung einer Bremsung" verstanden, dass die Einstellung der Druckverhältnisse vor der Beaufschlagung der Bremsen mit Bremsdruck ermittelt wird.

Bei jeder Alternative a) bis c) wird vorzugsweise jeweils das Gesamt-Bremsmoment oder die Soll-Fahrzeugverzögerung eingestellt, das bzw. die dem Bremswunschsignal entspricht. Somit betrifft die Einstellung der Druckverhältnisse die Verteilung des angeforderten Bremsdruckes bzw. der angeforderten Bremswirkung auf die verschiedenen Achsen bzw. Räder.

Diese Entscheidung zwischen den mindestens zwei, vorzugsweise drei Fällen wird aktuell auf Grundlage der ermittelten Reibverhältnisse oder Kraftschlussverhältnisse entschieden und nachfolgend dann die Bremsung aufgrund der gewählten Alternative eingeleitet.

Die aus Daten/Signalen vorab ermittelten Reibverhältnisse oder Kraftschlussverhältnisse zwischen Fahrbahn-Oberfläche und Reifenoberfläche können durch einen skalaren Reibwert oder auch z. B. durch Klassen oder Qualitätseinstufungen erfolgen, die somit auch Beeinträchtigungen des Kraftschlusses oder der Griffigkeit durch Geröll, Schnee, Eis, Feuchtigkeit etc. berücksichtigen. Es kann somit statt eines skalaren Reibwertes auch eine Klassierung in mehrere Klassen erfolgen, z. B. von Kraftschluss-Klasse 1 (schlechter Kraftschluss) bis Kraftschlussklasse n (bester Kraftschluss), mit n als natürlicher Zahl.

Aufgrund vorliegender Daten und/oder Signale wird aktuell entschieden, welche der zwei oder drei Druckverteilungs- oder Bremskraftverteilungs-Varianten a), b) und gegebenenfalls c) aktuell durchgeführt werden soll. Diese Entscheidung kann somit bei aufeinander folgenden Bremsungen jeweils unterschiedlich getroffen werden, wenn die aktuellen Daten zu unterschiedlichen Ergebnissen führen.

Somit wird vorteilhafterweise schon im Vorfeld einer Bremsung in Abhängigkeit der Umgebungsbedingungen bei niedrigem Reibwert zwischen Fahrbahn und Rad eine adhäsionsgerechte bzw. adhäsionsgerechtere Bremsdruckverteilung (Bremskraftverteilung) ausgebildet. Bei einer derartigen adhäsionsgerechteren Bremsdruckverteilung (Bremskraftverteilung)-werden somit vorzugsweise Achsen mit höherer Achslast mit einem höheren Bremsdruck beaufschlagt; oftmals ist dies die Hinterachse eines beladenen Nutzfahrzeuges, auch wenn hierdurch ein höherer Bremsbelagverschleiß der im Allgemeinen bereits aufgrund schlechterer Kühlung stärker belasteten Bremsbeläge der Hinterachse erfolgt.

Falls der Reibwert es zulässt, d. h. ein ermittelter Reibwert zwischen Reifenoberfläche und Fahrbahn hinreichend groß ist, kann hingegen statt der adhäsionsgerechten bzw. adhäsionsgerechteren Bremsdruckverteilung (Bremskraftverteilung) die Bremsdruckverteilung (Bremskraftverteilung) der Bremsbelagverschleiß-Druckverteilung durchgeführt werden.

Zur Entscheidung zwischen diesen beiden Fällen a) und b) kann der ermittelte (skalare) Reibwert mit einer Schwelle bzw. einem Grenzwert verglichen werden. Hierbei können z. B. auch eine untere Schwelle und eine obere Schwelle angesetzt werden, zwischen denen ein Übergangsbereich gebildet wird.

Kombinierte Verfahren gemäß Möglichkeit c) können z. B. Mittelwerte der aus a) und b) ermittelten Bremsdruckwerte verwenden, d.h. z. B. in Gewichtung 50-50 oder 60-40, je nach Klasse.

Es ergibt sich der Vorteil, dass aktuell ein Überbremsen und damit ein ABS-Regeleingriff an der Achse mit geringerer Achslast, welches beispielsweise bei einem Bus oftmals die Vorderachse ist, vermieden werden kann, dennoch aber über größere Zeiträume eine gute Harmonisierung des Bremsbelagverschleißes möglich ist.

Somit kann anders als z. B. in der DE 10 2008 034 544 bereits vor Einleitung der Bremsung und vor Auftreten einer Schlupf- bzw. Differenzschlupfüberschreitung und nicht erst nach Ermitteln eines Bremsschlupfes eine adhäsionsgerechte bzw. adhäsionsgerechtere Bremsung eingeleitet werden.

Somit können verschiedene Fahrbahnbedingungen ermittelt werden. So kann z. B. über einen Fahrbahndetektor die Fahrbahnoberfläche bzgl. Feuchtigkeit, Schnee, Eis, Temperatur und weiterer Eigenschaften und Beschaffenheiten überprüft werden. Ergänzend oder alternativ hierzu können derartige Fahrbahneigenschaften auch aus meteorologischen Daten ermittelt werden, die z. B. über Radio oder GPS empfangen werden. Weiterhin kann z. B. auch ein Fahrzeug-Kamerasystem zum Erfassen von Nebel, Schnee oder Eis eingesetzt werden, weiterhin können meteorologische Verhältnisse aus der Umgebungstemperatur und ggf. einem Regenwasser-Sensor auf der Scheibenoberfläche ermittelt werden.

Ergänzend können aus einem Navigationssystem auch Daten über die vorliegende Fahrstrecke herangezogen werden, so dass z. B. eine vorliegende Gefällstrecke erkannt wird und bereits im Vorfeld auf eine adhäsionsgerechtere Druckverteilung statt der Bremsbelagverschleiß- Druckverteilung entschieden wird, auch wenn ggf. der aktuelle Reibwert hoch ist und daher eine Bremsbelagverschleiß-Druckverteilung ermöglichen würde.

Nach Einleitung der Bremsung aufgrund der geeigneten Auswahl der Bremsdruckverteilung kann die Bremsung bzw. der Bremsvorgang selbst dann z. B. - in an sich bekannter Weise - als Regelung durchgeführt werden.

Das erfindungsgemäße Verfahren kann hierbei selbstlernend sein, so dass die Auswahl der Alternative selbsttätig verbessert werden kann. Insbesondere kann aus einer nachfolgenden Bremsung ermittelt werden, ob die vor Einleitung der Bremsung getroffene Auswahl des Ermittlungsverfahrens gegebenenfalls verbessert werden kann. Falls z. B. erkannt wird, dass bei einer Bremsbelagverschleiß-Druckverteilung eine zu hohe Blockierneigung auftritt, kann nachfolgend bereits bei etwas höheren Reibwerten auf eine Reibschluss-Druckverteilung entschieden werden bzw. deren Anteil erhöht werden.

Die Erfindung wird im Folgenden anhand der beiliegenden Zeichnungen an einigen Ausführungsformen erläutert. Es zeigen:

Fig. 1    ein Fahrzeug mit einem Bremssystem gemäß einer Ausführungsform der Erfindung bei Fahrt auf einer Straße;
Fig. 2    ein Flussdiagramm eines Verfahrens gemäß einer Ausführungsform;
Fig. 3    ein Flussdiagramm eines Verfahrens gemäß einer weiteren Ausführungsform;
Fig. 4    ein Diagramm verschiedener Ausführungsform zur Bestimmung der Druckverteilung im Fall einer höheren Achslast an der Hinterachse, und
Fig. 5    ein Diagramm verschiedener Ausführungsformen im Fall einer höheren Achslast an der Vorderachse.

Ein als Nutzfahrzeug ausgebildetes Fahrzeug 1 fährt auf einer Fahrbahn 2 mit einer Fahrbahnoberfläche 2a. Das Fahrzeug 1 ist hier beispielhaft zweiachsig gezeigt und weist eine Vorderachse VA mit Vorderrädern 3 sowie eine Hinterachse HA mit Hinterrädern 4 auf. Die Vorderräder 3 weisen eine Reifenoberfläche 3a, entsprechend die Hinterräder 4 eine Reifenoberfläche 4a auf, mit denen sie jeweils auf der Fahrbahnoberfläche 2a in Kontakt sind. Das Fahrzeug 1 weist ein pneumatisches Bremssystem 5 auf, das unter anderem eine Steuereinrichtung (ECU) 6, Vorderradbremsen 8 und diese ansteuernde elektropneumatische Bremsventileinrichtungen 9 sowie Hinterradbremsen 10 und diese ansteuernde elektropneumatische Bremsventileinrichtungen 12, sowie Drehzahlsensoren 14, 15 zur Ausgabe von Drehzahl-Messsignalen S3, S4 aufweist. Weitere an sich bekannt, hier nicht gezeigte Komponenten wie eine Druckluftbeschaffungsanlage, Mehrkreisventilschutzeinrichtung, Druckluftspeicher usw. sind dem Fachmann bekannt.

Die Bremsventileinrichtungen 9 und 12 sind hier vereinfacht dargestellt und können insbesondere auch Relais-Ventile enthalten. Die Steuereinrichtung 6 steuert die Bremsventileinrichtungen 9 und 12 über elektrische Bremssteuersignale S1 und S2 an. Hierdurch wird in den Vorderradbremsen 8 der Vorderachse VA und den Hinterradbremsen 10 der Hinterachse HA Bremsdruck individuell, d.h. gegebenenfalls rechts und links jeweils unterschiedlich eingesteuert.

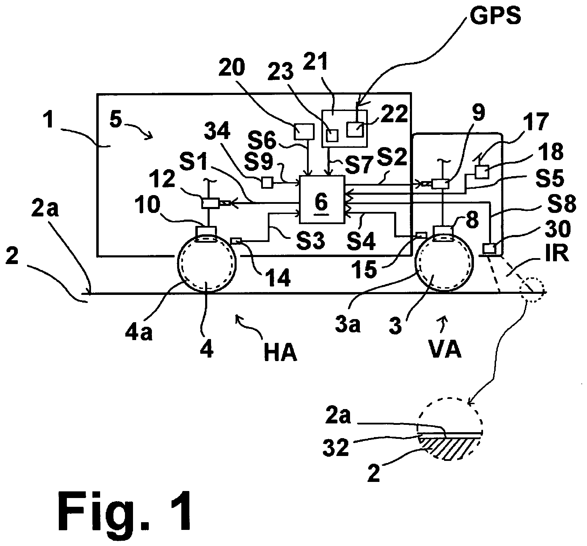

In Fig. 1 nicht gezeigt ist eine gegebenenfalls vorhandene pneumatische Rückfallebene, um bei Ausfall der Elektronik eine pneumatische Steuerung des Bremssystems 5 zu ermöglichen.

Weiterhin weist das Bremssystem 5 ein Bremspedal 17 mit Bremswertgeber 18 auf, und vorzugsweise eine Fahrdynamikregeleinrichtung 20, die gegebenenfalls auch in der Steuereinrichtung 6 integriert sein kann. Der Fahrer gibt über das Bremspedal 17 und den Bremswertgeber 18 seinen Verzögerungswunsch als Bremswunschsignal S5 ein, aus dem die Steuereinrichtung 6 eine Soll-Verzögerung ermittelt und daraufhin eine Verzögerungsregelung durchführt.

Die Fahrdynamikregeleinrichtung 20 kann z. B. ein ABS, ein ESP (elektronisches Stabilitätsprogramm) bzw. ein ASR zum Abbremsen der angetriebenen Räder 4 der Hinterachse HA und/oder ein Rollstabilitätsfunktion zum Verhindern eines seitlichen Umkippens und /oder ein Abstandsregelsystem ACC (Adaptive Cruise Control) und/oder eine Tempomatfunktion (CC) (Cruise Control) umfassen und gibt Bremswunschsignale S6 an die Steuereinrichtung 6 aus.

Weiterhin ist in dem Fahrzeug 1 eine Navigationseinrichtung 21 mit einem GPS-Empfänger 22 zum Empfangen von GPS-Signalen GPS und einem Kartenspeicher 23 (oder entsprechend eine Einrichtung zum drahtlosen Empfangen von Kartendaten) vorgesehen, die somit aktuelle Fahrstreckensignale S7 an die Steuereinrichtung 6 ausgibt. Somit kann die Steuereinrichtung 6 aus den Kartendaten den vor dem Fahrzeug 1 liegenden Verlauf der Fahrbahn 2, insbesondere bezüglich Steigung, Gefälle, Kurven, weiterhin auch geografischer Lage wie z. B. Gebirge, Höhe, bzw. Höhenverlauf, weiterhin auch aktuelle Temperaturdaten und gegebenenfalls auch Daten über die Frequentierung der Straße bzw. der Fahrbahn 2 in diesem Straßenverlauf zu der entsprechenden Tageszeit und Kalenderzeit berücksichtigen.

Weiterhin weist das Fahrzeug 1 einen Fahrbahndetektor 30 auf, der z. B. mittels IR-Strahlen IR die Fahrbahnoberfläche 2a detektiert, z. B. gemäß der Detailvergrößerung auf einen Belag 32 hin, der z. B. Wasser oder Eis oder Schnee sein kann, oder gegebenenfalls andere Eigenschaften, die das betreffende Material detektieren. Der Fahrbahndetektor 30 gibt Fahrbahn-Messsignale S8 an die Steuereinrichtung 6 aus. Weiterhin ist z. B. ein Temperatursensor 34 vorgesehen, der Temperatur-Messsignale S9 an die Steuereinrichtung ausgibt.

Die Steuereinrichtung 6 kann bezüglich der einzelnen Funktionalitäten auch in einzelne, miteinander wechselwirkende Steuereinrichtungen unterteilt sein.

Die Steuereinrichtung 6 führt eine achslastabhängige Bremsdruckverteilung (Bremskraftverteilung, BKV) auf die Vorderachse VA und Hinterachse HA durch. Die Bremsdruckverteilung berücksichtigt jeweils die Achslasten, d.h. die Belastung der Vorderachse VA und Hinterachse HA, die durch Achslastsensoren und/oder adaptiv durch Erlernen während der Fahrt aus dem Verhalten der Räder 3 und 4 bzw. Bremsen 8 und 10 der Vorderachse VA und der Hinterachse HA ermittelt werden. Die Bremsdruckverteilung berücksichtigt somit Achslasten, die gesamte Fahrzeugmasse, gegebenenfalls weiterhin z. B. auch kurz vorher abgelaufene ASR- und/oder ABS-Regelvorgänge an den Achsen HA und VA.

Weiterhin können von der Steuereinrichtung 6 verschiedene Modi zur Bremskraft- bzw. Bremsdruckverteilung betrieben werden:

Gemäß einem ersten Modus wird eine reine Bremsbelagverschleiß-Druckverteilung durchgeführt, wonach ein möglichst gleichmäßiger Verschleiß der Bremsbeläge der Radbremsen 8 und 10 angestrebt wird. Dieser Modus wird insbesondere durchgeführt, wenn von der Steuereinrichtung 6 erkannt wird, dass ein hinreichend hoher Reibwert

μ zwischen der Fahrbahnoberfläche 2a und den Reifenoberflächen 3a und 4a vorliegt, d.h. z. B. bei Überschreiten einer ersten Schwelle μ1, also μ > μ1.

Wenn die Steuereinrichtung 6 hingegen erkennt, dass der Reibwert kritisch oder sehr gering ist oder sein kann, wird als zweiter Modus statt einer Bremsbelagverschleiß-Druckverteilung eine reine Reibschluss- Druckverteilung RP durchgeführt, vorzugsweise unter Berücksichtigung der Achslasten der Vorderachse VA und der Hinterachse HA, und über die elektrischen Bremssteuersignale S1 und S2 die mit einer größeren Achslast belastete ("schwerere") Achse, z. B. die Hinterachse HA, mit einem stärkeren Bremsdruck angesteuert als die weitere Achse VA.

Grundsätzlich ist eine Unterteilung in diese zwei Fälle möglich, d.h. entweder reine Bremsbelagverschleiß- Druckverteilung BVP oder eine reine Reibschluss-Druckverteilung RP. Somit kann eine einzige Schwelle gesetzt werden und die Unterteilung in μ > μ1 oder also μ <= μ1 gewählt werden.

Es sind aber auch Unterteilungen in mehrere Klassen möglich, d.h. Mischformen, bei denen z. B. stufenweise mit steigendem ermitteltem Reibwert μ ein Bremsdruckanteil der Achse mit höherer Achslast erhöht und entsprechend ein Bremsdruckanteil der Achse mit geringerer Achslast verringert wird. Somit können mehrere Schwellen gesetzt werden und/oder zur Klassierung grobe Abschätzungen der relevanten Zustände angesetzt werden.

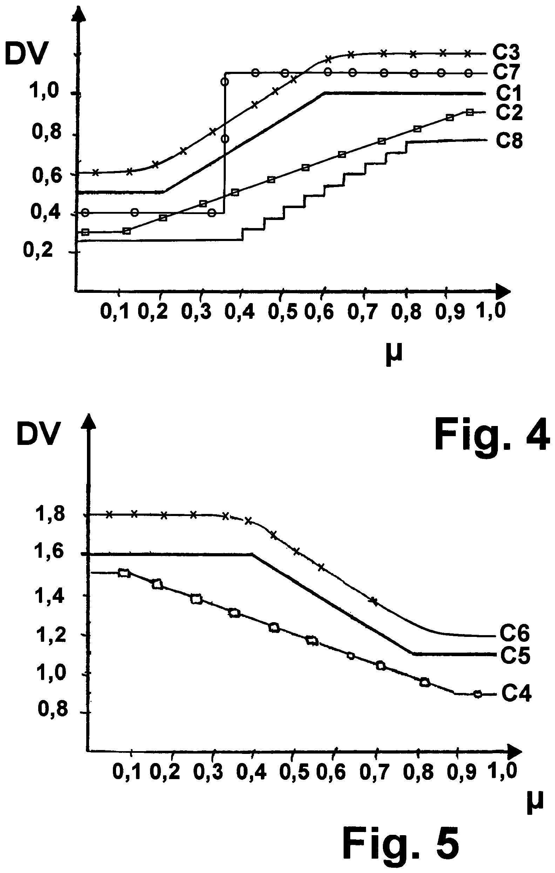

Fig. 4 und 5 beschreiben einige Verfahren als Ausführungsformen der Erfindung.

Auf der vertikalen Ordinate ist jeweils als dimensionsloser Wert eine Druckverteilung DV eingezeichnet, die z. B. das Verhältnis von Bremsdruck an der Vorder- zu Hinterachse darstellt. Mit steigendem Wert von DV steigt somit der Anteil des Bremsdrucks an der Vorderachse.

Auf der horizontalen Abszisse ist der Reibwert μ gezeigt, der somit nach rechts zunimmt. Statt des Reibwertes μ können hier jedoch auch verschiedene Reibschlussklassen mit nach rechts zunehmendem Reibschlussverhalten, Reibschlussqualitäten oder Griffigkeitsklassen angesetzt werden; derartige Angaben können somit auch z. B. einen Untergrund mit Geröll, Kies, Schnee, Eis, Wasser/Aquaplaning usw. beschreiben.

Es ergeben sich somit jeweils ganz links ein Bereich mit geringem Reibwert bzw. Griffigkeit, in dem somit eine Druckverteilung nach Reibschluss-Kriterien eingestellt wird, und ganz rechts ein Bereich mit sehr gutem Reibwert bzw. Griffigkeit, in dem somit eine Druckverteilung nach Belagverschleiß-Kriterien eingestellt wird. Dazwischen liegen jeweils Bereiche mit mittlerem Reibwert bzw. Griffigkeit.

In Fig. 4 sind Verfahren für den Fall gezeigt, dass die Druckverteilung DV_RP für eine Reibschluss-Druckverteilung (Reibschluss- Einstellung) kleiner als eine Druckverteilung DV_BVP für eine Belagverschleiß- Druckverteilung (Belagverschleiß- Harmonisierung) ist, d.h.

$$DV\_RP < DV\_BVP$$

Fig. 4 entspricht somit dem Fall, dass - bei gleich bzw. gleichwertig installierten Bremsen bzw. Bremsauslegungen - aktuell die Achslast der Vorderachse geringer ist als die Achslast der Hinterachse, wie es z. B. bei einem Bus ohne Passagiere oder einem hinreichend beladenem LKW auftreten kann.

C7 zeigt die Kurve für eine Auswahl zwischen den Alternativen entweder Reibschluss- Druckverteilung oder Bremsbelagverschleiß- Druckverteilung, d.h. eine Stufenfunktion ohne mittleren Übergangsbereich. Bei niedrigen Werten von μ wird somit eine Reibschluss- Druckverteilung durchgeführt mit niedrigem DV, bei Überschreiten eines Grenzwertes von μ dann direkt die Bremsbelagverschleiß- Druckverteilung.

Weiterhin ist ein stufenloser Übergang zwischen reiner Bremsbelagverschleiß-Druckverteilung (DV_BVP) und reiner Reibschluss- Druckverteilung (DV_RP) möglich. Mit steigendem ermittelten Reibwert μ zwischen einem unteren Reibwert μ, beispielsweise 0,2 und einem oberen Reibwert μ, beispielsweise 0,6, wird stufenlos zwischen der Druckverteilung gemäß der Reibschluss- Druckverteilung RP, gültig bei ermittelten Reibwerten μ von kleiner/gleich 0,2 und der Druckverteilung der Bremsbelagverschleiß-Druckverteilung DVP, gültig bei ermittelten Reibwerten μ von größer/gleich 0,6, gewechselt.

Statt des unteren Reibwertes μ von 0,2 ist auch ein unterer Wert von beispielsweise 0,1 oder 0,3 möglich und statt des oberen Reibwertes von 0,6 ein oberer Reibwert μ von beispielsweise 0,5 oder 0,8.

Hierbei können die stufenlosen Übergänge zwischen den Druckverteilungen DV_RP und DV_BVP linearer Art sein, d. h. durch eine Interpolation ermittelt werden gemäß C1 und C2, bei denen somit bei mittleren Reibwerten μ eine lineare Interpolation zwischen dem oberen Wert der DV und dem unteren Wert der DV gebildet wird. Dies entspricht somit einem Ansatz mit einer unteren und oberen Schwelle des Reibewertes μ.

Weiterhin kann auch eine andere mathematische Funktion angesetzt werden, die bewirkt, dass der Übergang stetig differenzierbar bzw. gleitend harmonisch erfolgt, wie bspw. in der Kurve C3 dargestellt.

Auch sind stufige Übergänge möglich, bspw. entsprechend Kurve C8 in Fig.4.

Fig. 5 zeigt entsprechend Kurven C4, C5 und C6 für den Fall DV_RP > DV_BVP. Fig. 5 gibt somit einen

EP 2 748 041 B1

Fahrzustand wieder, bei dem die Vorderachslast größer ist als die Hinterachslast, wie es z. B. bei einem leeren oder gering beladenen LKW auftreten kann. Hierbei stellen C4 und C5 lineare Übergänge und C6 einen harmonischen bzw. glatten (stetig differenzierbaren) Übergang dar.

Erfindungsgemäß führen entsprechend auch Fahrzustände, bei denen die einzustellenden Druckverhältnisse sich für die Fälle Reibschluss- Druckverteilung RP und Bremsbelagverschleiß- Druckverteilung DVP nicht unterscheiden, zu keinen Fehlern oder Nachteilen; die Kurven von Fig. 4 und Fig. 5 werden hierbei vielmehr zu horizontalen Geraden, wenn die Funktionswerte am linken und rechten Ende sich annähern.

Die in Fig. 1 gezeigte Steuereinrichtung 6 ermittelt jeweils Reibwerte $\mu$ zwischen der Fahrbahnoberfläche 2a und den Reifenoberflächen 3a und 4a. Vorteilhafterweise hat die Steuereinrichtung 6 Kenntnisse über die Reifenoberflächen 3a und 4a, z. B. aus einer Reifenprofilmessung (Profilsensoren), gegebenenfalls auch aus Daten der bisherigen Fahrleistung der Räder 3 und 4, insbesondere aber auch aus Kenntnis über das bisherige Bremsschlupfverhalten der Räder 3 und 4. Grundsätzlich kann die Bewertung des Reibwertes jedoch auch ohne genauere Kenntnisse der Reifenoberflächen 3a und 4a erfolgen; in diesem Fall wird insbesondere die Fahrbahnoberfläche 2a berücksichtigt,

Die Detektion der Fahrbahnoberfläche 2a kann direkt über den Fahrbahndetektor 30 erfolgen, falls ein solcher vorgesehen ist. Weiterhin kann - zusätzlich oder anstelle des Fahrbahndetektors 30 - die Fahrbahnoberfläche 2a auch abgeschätzt werden aus der über die Temperatur-Messsignale S9 ermittelten Umgebungstemperatur, da Reibwerte zwischen zwei Materialien wie Asphalt und Gummi temperaturabhängig sind und insbesondere bei Frost geringere Reibwerte anzusetzen sind, weiterhin über metrologische Daten, die über Datenfernübertragung, z. B. über den GPS-Empfänger 22 oder auch Radiosignale empfangen werden und Daten über Niederschlag und Temperatur enthalten können. Weiterhin durch Erfassung der Fahrbahnumgebung, z. B. mittels einer Kamera, mit der gegebenenfalls Nebel, Schneefall und Regen detektiert werden können. Weiterhin kann bei Vorhandensein eines Regendetektors zur Erkennung von Regentropfen auf der Scheibenoberfläche entsprechend auf eine nasse Fahrbahnoberfläche 2a erkannt werden.

Eine adhäsionsgerechte bzw. adhäsionsgerechtere Bremskraftverteilung bzw. Bremsdruckverteilung zur Belastung einer Achse mit zur anderen Achse höheren Achslast kann somit eingestellt werden, wenn auf einen niedrigen Reibwert $\mu$ zwischen Radoberfläche 3a, 4a und Fahrbahnoberfläche 2a erkannt wird und/oder aus den Kartendaten und den empfangenen GPS-Signalen auf eine Bergabfahrt mit längerer Fahrtstrecke und/oder Serpentinen erkannt wird, gegebenenfalls unter Berücksichtigung eines aus den Kartendaten erkennbar schlechten Zustandes der Fahrbahnoberfläche 2a (schlechte Asphaltierung, Schotterpiste). In derartigen Fällen wird somit eine rein adhäsionsgerechte bzw. adhäsionsgerechtere Bremskraftverteilung bzw. Bremsdruckverteilung, d.h. eine mehr an den Reibschluss angepasste Druckverteilung für den nachfolgenden Bremsvorgang eingestellt.

Bei Klassierung in mehrere Klassen kann der Bremsdruckanteil entsprechend verändert werden, z. B. können die Bremsdruckverteilungen beider reinen Modi, d.h. der reinen Reibschluss-Druckverteilung (Adhäsions- Druckverteilung, Reibwert-Druckverteilung) und reinen Bremsbelagverschleiß-Druckverteilung ermittelt werden. Dann kann die Differenz des Bremsdrucks an der Achse mit der hohen Achslast in den beiden Modi ermittelt werden und stufenweise an die Klassen verteilt werden, d.h. bei drei Klassen bekommt die mittlere Klasse 50% der Differenz zugeteilt. Der Bremsdruck an der Achse mit der hohen Achslast liegt somit beim Mittelwert der beiden reinen Modi. Entsprechendes gilt bei feineren Abstufungen. So können z. B. Klassen mit 10% bis 90% Adhäsions-Druckverteilung (Reibschluss-Druckverteilung) zwischen den reinen Modi (d.h. 0%-Klasse und 100%-Klasse gebildet werden).

In die Klassierung können Einschätzungen aus den weiteren Sensoren und empfangenen Wetterdaten mit eingehen, so dass z. B. bei schlechter Wettervorhersage und/oder ermittelter Frostgefahr und/oder längerem Gefälle eine Klasse näher an der reinen Adhäsions-Druckverteilung (Reibschluss-Druckverteilung) eingestuft wird.

Erfindungsgemäß ist es möglich, eine kontinuierliche Abstufung auszubilden, d.h. statt konkreter Klassen einen kontinuierlichen Wert zu bilden; somit werden "unendlich viele" Klassen bzw. ein Kontinuum gebildet.

Hierzu sei folgendes Beispiel angenommen: Das Fahrzeug (Fig.1) ist ein zweiachsiger Bus. Ohne Passagiere, d.h. im leeren Zustand, beträgt die Achslast der Vorderachse (VA) 3,5 t und die Achslast der Hinterachse (HA) 7 t, die Vorderachse ist somit die Achse mit der geringen Achslast und die Hinterachse die Achse mit der hohen Achslast. An der Vorderachse und an der Hinterachse sind Bremsen gleicher Größe und ebenso Bremszylinder gleicher Größe installiert (verbaut). Bei einem Bremsvorgang sollen längsdynamische Einflüsse, d.h. Einflüsse der verzögerungsabhängigen Verlagerung des Schwerpunktes des Fahrzeugs, bei Vorwärtsfahrt in Richtung der Vorderachse, nicht berücksichtigt werden.

Für eine Reibschluss-Druckverteilung (Adhäsions- Druckverteilung) lautet das Ziel gleiche Schlupfverhältnisse an Vorderachse (VA) und Hinterachse (HA) und somit ein Differenzschlupf (ds) zwischen der Vorderachse und der Hinterachse von Null. Um dieses Ziel zu erreichen, müssen sich die Bremsdrücke an Vorderachse und Hinterachse proportional zu den Achslasten verhalten,

es gilt somit:

$$DV\_RP = p\_Soll\_VA/p\_Soll\_HA \sim Achslast\_VA/Achslast\_HA = 3,5t/7t = 0,5$$

Für die Bremsbelagverschleiß-Druckverteilung (BVP) lautet das Ziel gleicher Bremsbelagverschleiß an Vorderachse und Hinterachse. Es müssen bei an der Vorderachse und der Hinterachse installierten gleichen Bremsen und noch nicht eingetretenem Verschleißungleichlauf somit gleiche Bremsdrücke an Vorderachse und Hinterachse ausgesteuert werden.

Es gilt somit:

$$DV\_BVP = p\_Soll\_VA/p\_Soll\_HA = 1,0$$

Vorzugsweise kommt bei Reibwerten von Fahrbahn/Reifen μ kleiner 0,2 stets die Bremsdruckverteilung bzw. Bremskraftverteilung der reinen Reibschluss-Druckverteilung (RP) zur Anwendung und bei Reibwerten von Fahrbahn/Reifen μ größer 0,6 stets die reine Bremsdruckverteilung bzw. Bremskraftverteilung der Bremsbelagverschleiß-Druckverteilung (BVP), dazwischen wird vorzugsweise Reibwert-abhängig stufenlos interpoliert

In dem Diagramm der Fig. 4 ist diese Variante der reibwertabhängigen Bremsdruckverteilung in der Kurve C1 dargestellt.

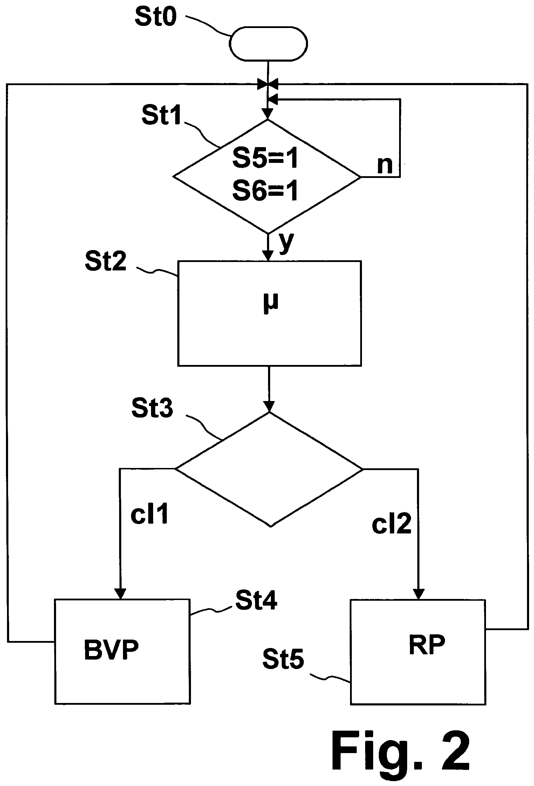

Das erfindungsgemäße Verfahren in Fig. 2 zeigt eine Unterteilung in zwei Klassen. Es wird in St0 bei Inbetriebnahme des Bremssystems 5, d.h. im Allgemeinen bei Starten des Motors begonnen. Gemäß Schritt St1 wird überprüft, ob durch den Fahrer und/oder durch die Fahrdynamikregeleinrichtung 20 ein Bremswunsch-Signal S5 oder S6 eingegeben wird, hier als Boolescher Wert "S5=1 OR S6 = 1 ?" mit dem Booleschen Logikoperator OR verdeutlicht. Falls dies nicht der Fall ist, wird gemäß Verzweigung n das Verfahren vor den Schritt St1 zurückgesetzt.

Bei Vorliegen eines Bremswunsches, d.h. S5= und/oder S6=1, wird gemäß Verzweigung y in Schritt St2 nachfolgend die Fahrbahnoberfläche bzw. der Reibwert μ zwischen der Fahrbahnoberfläche 2a und den Reifenoberflächen 3a, 4a detektiert und in Schritt St3 entschieden, ob gemäß der Verzweigung cl1 eine erste Klasse gewählt wird, gemäß der in Schritt St4 eine Bremsbelagverschleiß-Druckverteilung BVP zum Erreichen eines gleichmäßigen Verschleißes eingestellt wird oder gemäß der Verzweigung cl2 eine zweite Klasse gewählt wird, gemäß der in Schritt St5 eine adhäsionsgerechte Bremsdruckverteilung als RP (Reibschluss-Druckverteilung) eingestellt wird. Somit werden entsprechend in den Schritten St4 und St5 Bremsregelungen oder Bremssteuerungen der Radbremsen 8 und 10 durchgeführt, jeweils überlagert mit den entsprechenden weiter einlaufenden Regelfunktionen wie ABS, ESP, weiterhin gegebenenfalls auch Längsregelungen wie ACC usw. Vorteilhafterweise können hierbei insbesondere sicherheitsrelevante, radspezifische Bremsregelungen wie ABS und ESP im Allgemeinen Vorrang haben vor einer Bremsbelagverschleiß- Regelung.

Nachfolgend wird in beiden Fällen das Verfahren vor den Schritt St1 zurückgesetzt.

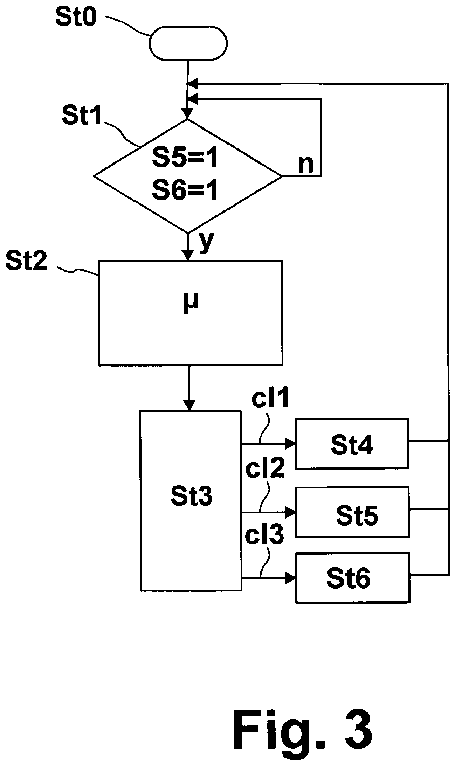

Fig. 3 zeigt eine entsprechende Klassierung in drei Klassen cl1, cl2 und cl3, wobei cl1 und cl2 den Klassierungen von Fig. 2 entsprechen und die mittlere Klasse cl3 nachfolgend in Schritt St6 eine Druckverteilung einstellt, bei der der Bremsdruck der schweren Achse HA gegenüber cl1 erhöht und gegenüber cl2 verringert ist.

Auch hier werden die Druckverteilungen überlagert mit den entsprechenden weiter einlaufenden Regelfunktionen wie ABS, ESP, weiterhin gegebenenfalls auch Längsregelungen wie ACC.

Bezugszeichenliste (Bestandteil der Beschreibung)

| | |
|---|---|
| 1 | Fahrzeug |
| 2 | Fahrbahn |
| 2a | Fahrbahnoberfläche |
| 3 | Vorderräder |
| 3a | Reifenoberfläche |
| 4 | Hinterräder |
| 4a | Reifenoberfläche |
| 5 | Bremssystem |
| 6 | Steuereinrichtung |
| 8 | Vorderradbremsen |
| 9 | Bremsventileinrichtungen |
| 10 | Hinterradbremsen |
| 12 | Bremsventileinrichtungen |

| 14 | Drehzahlsensoren |
|---|---|
| 15 | Drehzahlsensoren |
| 17 | Bremspedal |
| 18 | Bremswertgeber |
| 20 | Fahrdynamikregeleinrichtung |
| 21 | Navigationseinrichtung |
| 22 | GPS-Empfänger |
| 23 | Kartenspeicher |
| 30 | Fahrbahndetektor |
| 32 | Belag |
| 34 | Temperatursensor |

| S1 | Bremssteuersignale |
|---|---|
| S2 | Bremssteuersignale |
| S3 | Drehzahl-Messsignale |
| S4 | Drehzahl-Messsignale |
| S5 | Bremswunschsignal |
| S6 | Bremswunschsignal |
| S7 | Fahrstreckensignale |
| S8 | Fahrbahn-Messsignale |
| S9 | Temperatur-Messsignale |

| DV | Druckverteilung |
|---|---|
| HA | Hinterachse |
| IR | IR-Strahlen |
| GPS | GPS-Signale |
| VA | Vorderachse |
| $\mu$ | Reibwert |

| St0-St6 | Verfahrensschritte |
|---|---|
| cl1, cl2, cl3 | Klassen |
| C1-C8 | Kurven in Fig. 4, 5 |

| RP | Reibschluss- Druckverteilung |
|---|---|
| | BVP Bremsbelagverschleiß-Druckverteilung |

## Patentansprüche

1. Verfahren zum Steuern oder Regeln eines Fahrzeug-Bremssystems (5), bei dem bei Vorliegen eines Bremswunschsignals (S5, S) mittels eines Verfahrens zur Bremsdruckverteilung Bremsdrücke an Bremsen (8, 10) an Achsen (VA, HA) und/oder Rädern (3, 4) des Fahrzeugs (1) eingestellt werden, wobei bei Vorliegen des Bremswunschsignals (S5, S6) vor Einleitung der Bremsung entschieden wird, ob oder inwieweit zur nachfolgenden Einleitung der Bremsung die Bremsdruckverteilung in einer Bremsverschleiß-Druckverteilung (BVP) oder in einer Reibschluss-Druckverteilung (RP) erfolgt,
**dadurch gekennzeichnet, dass**
die Entscheidung über die Bremsdruckverteilung auf Grundlage von aktuellen empfangenen oder detektierten Daten über Reibverhältnisse ($\mu$) oder Kraftschlussverhältnisse zwischen einer Fahrbahnoberfläche (2a) und Reifenoberflächen (3a, 4a) des Fahrzeugs (1) getroffen wird.

2. Verfahren nach Anspruch 1, **dadurch gekennzeichnet, dass** vor Einleitung der Bremsung die Bremsdruckverteilung durch eine der folgenden Möglichkeiten ermittelt wird:

   a) auf Grundlage einer Bremsbelagverschleiß-Druckverteilung (BVP),
   b) auf Grundlage einer Reibschluss-Druckverteilung (RP),
   c) auf Grundlage sowohl der Bremsbelagverschleiß-Druckverteilung (BVP) als auch der Reibschluss-Druckverteilung (RP).

3. Verfahren nach Anspruch 1 oder 2, **dadurch gekennzeichnet, dass** die Daten über Reibverhältnisse (µ) oder Kraftschlussverhältnisse eines oder mehrere der folgenden Messsignale umfassen:

   Fahrbahn-Messsignale (S8) eines Fahrbahndetektors (30) zur Detektion der Fahrbahnoberfläche (2a), Temperatur-Messsignale (S9) eines Temperaturdetektors (34) zur Detektion einer Umgebungstemperatur und/oder eines Regendetektors und/oder eines Fahrzeugumgebungs-Erfassungssystems auf Kamerabasis zur Detektion von Nebel, Schnee oder Regen.

4. Verfahren nach einem der vorherigen Ansprüche, **dadurch gekennzeichnet, dass** die Daten über Reibverhältnisse (µ) oder Kraftschlussverhältnisse Navigationssignale (S7) aus Kartendaten und globalen Positionsdaten eines GPS umfassen,
   wobei die Navigationssignale (S7) enthalten:

   Daten über die Wegstrecke und/oder über Steigungen und/oder über Kurven und/oder über einen Fahrbahn-Zustand und/oder über eine aktuelle Frequentierung der vorausliegenden Wegstrecke.

5. Verfahren nach einem der vorherigen Ansprüche, **dadurch gekennzeichnet, dass** die Daten über Reibverhältnisse (µ) oder Kraftschlussverhältnisse umfassen:

   Daten- oder Messsignale über einen Zustand der Reifenoberfläche (3a, 4a), z. B. Bremsbelagverschleiß-Signale und/oder Daten über bisherige Fahrleistung und/oder Daten über bisherige Bremsleistung der Räder (4, 3).

6. Verfahren nach einem der vorherigen Ansprüche, **dadurch gekennzeichnet, dass** bei der Entscheidung (St3), welche Druckverteilung einzustellen ist, ein aktuell ermittelter Reibwert (µ) mit mindestens einer Schwelle (µ1) verglichen wird, wobei
   falls der Reibwert (µ) eine erste Schwelle (µ1) unterschreitet, eine Reibschluss- Druckverteilung (RP) eingestellt wird und
   falls der Reibwert (µ) die erste Schwelle (µ1) oder eine weitere Schwelle überschreitet, eine Bremsverschleiß-Druckverteilung (BVP) eingestellt wird.

7. Verfahren nach Anspruch 6, **dadurch gekennzeichnet, dass** die mindestens eine Schwelle (µ1) in Abhängigkeit der vorausliegenden Fahrstrecke ermittelt und festgelegt wird.

8. Verfahren nach einem der vorherigen Ansprüche, **dadurch gekennzeichnet, dass**
   in einer reinen Reibschluss- Druckverteilung (RP) die Bremsen (10) einer mit höherer Achslast beaufschlagten Achse (HA) mit einem höheren Bremsdruck beaufschlagt werden als in einer reinen Bremsbelagverschleiß- Druckverteilung und
   in einer reinen Reibschluss- Druckverteilung (RP) die Bremsen (8) einer mit leichterer Achslast beaufschlagten Achse (VA) mit einem niedrigeren Bremsdruck beaufschlagt werden als in einer reinen Bremsbelagverschleiß-Druckverteilung.

9. Verfahren nach einem der vorherigen Ansprüche, **dadurch gekennzeichnet, dass** vor Einleitung der Bremsung eine Bremsdruckverteilung zwischen Achsen und/oder Rädern ermittelt wird durch Ermittlung einer reinen Reibschluss- Druckverteilung (RP) und einer reinen Bremsbelagverschleiß- Druckverteilung und nachfolgender Bildung von Mittelwerten aus den beiden Druckverteilungen für zumindest mittlere Reibschluss-Bereiche.

10. Verfahren nach Anspruch 9, **dadurch gekennzeichnet, dass** die Mittelwerte gebildet werden durch eine lineare Funktion, eine Stufen-Funktion oder eine nicht-lineare, stetig differenzierbare Funktion.

11. Verfahren nach einem der vorherigen Ansprüche, **dadurch gekennzeichnet, dass**
    vor Einleitung der Bremsung in Abhängigkeit des ermittelten aktuellen Reibwertes (µ) eine Klassierung in mehr als zwei Klassen durchgeführt wird, wobei die Klassen unterschiedliche Anteile einer Reibschluss-Druckverteilung (RP) und einer Bremsverschleiß- Druckverteilung (BVP) enthalten und in einer Klasse mit einem höheren Anteil einer Reibschluss- Druckverteilung (RP) an einer mit höherer Achslast beaufschlagten Achse (HA) ein höherer Bremsdruck eingestellt wird als in einer Klasse mit einem geringeren Anteil einer Reibschluss- Druckverteilung (RP).

12. Verfahren nach Anspruch 11, **dadurch gekennzeichnet, dass** die Umgebungsbedingungen klassiert werden in mehr als zwei Klassen, und in Abhängigkeit der Klassierung ein Bremsdruck-Anteil auf die Bremsen (10) einer mit schwerer Achslast beaufschlagten Achse (HA) verändert wird.

13. Steuereinrichtung (6) für ein Fahrzeug-Bremssystem (5), insbesondere zur Durchführung eines Verfahrens nach einem der vorherigen Ansprüche,
wobei die Steuereinrichtung (6) Bremswunschsignale (S5, S) aufnimmt, eine Bremsdruckverteilung ermittelt und Steuersignale (S1, S2) zur Einstellung von Bremsdrücken an Bremsen (8, 10) an Achsen (VA, HA) und/oder Rädern (3, 4) des Fahrzeugs (1) einstellt,
wobei bei Vorliegen des Bremswunschsignals (S5, S6) vor Einleitung der Bremsung entschieden wird, ob oder inwieweit zur nachfolgenden Einleitung der Bremsung die Bremsdruckverteilung in einer Bremsverschleiß-Druckverteilung (BVP) oder in einer Reibschluss- Druckverteilung (RP) erfolgt, **dadurch gekennzeichnet, dass**
die Steuereinrichtung (6) bei Vorliegen des Bremswunschsignals (S5, S6) vor Einleitung der Bremsung aktuelle Daten über Reibverhältnisse ($\mu$) oder Kraftschlussverhältnisse zwischen einer Fahrbahnoberfläche (2a) und Reifenoberflächen (3a, 4a) des Fahrzeugs (1) aufnimmt und entscheidet welche Bremsdruckverteilung erfolgt.

14. Bremssystem (5) für ein Fahrzeug (1), das aufweist
eine Steuereinrichtung (6) nach Anspruch 13,
Bremsen (8, 10) an Rädern (3) einer Vorderachse (VA) und Rädern (4) einer Hinterachse (HA),
Raddrehzahlsensoren (14, 15) zur Messung der Raddrehzahlen und Ventile (12, 9) zur Aussteuerung des Bremsdrucks in den Radbremsen (8, 10),
wobei die Steuereinrichtung (6) Bremswunschsignale (S5, S6) von einem Bremswertgeber (18) und/oder einer Fahrdynamik-Regeleinrichtung (20) aufnimmt und auf Grundlage der aufgenommenen Bremswunsch-Signale Bremsbetätigungen an den Bremsen (8, 10) ermittelt und Bremssteuersignale (S1, S2) an die Ventile (12, 9) ausgibt.

15. Fahrzeug (1) mit einem Bremssystem (5) nach Anspruch 14.

## Claims

1. Method for carrying out open-loop or closed-loop control of a vehicle brake system (5) in which, when a braking request signal (S5, S) is present, brake pressures are set at brakes (8, 10) on axles (VA, HA) and/or wheels (3, 4) of the vehicle (1) by means of a method for distributing brake pressure, wherein when the braking request signal (S5, S6) is present before the initiation of the braking it is decided whether, or to what extent, the brake pressure is distributed in a brake wear-pressure distribution system (BVP) or in a grip-pressure distribution system (RP) for the subsequent initiation of the braking, **characterized in that** the decision relating to the brake pressure distribution is made on the basis of current received or detected data relating to frictional conditions ($\mu$) or adhesion conditions between a roadway surface (2a) and tire surfaces (3a, 4a) of the vehicle (1).

2. Method according to Claim 1, **characterized in that**, before the initiation of the braking, the distribution of the brake pressure is determined by one of the following possibilities:

   a) on the basis of a brake lining wear-pressure distribution (BVP),
   b) on the basis of a grip-pressure distribution (RP),
   c) on the basis of both the brake lining wear-pressure distribution (BVP) and the grip-pressure distribution (RP).

3. Method according to Claim 1 or 2, **characterized in that** the data relating to frictional conditions ($\mu$) or adhesion conditions comprises one or more of the following measurement signals: roadway measurement signals (S8) of a roadway detector (30) for detecting the roadway surface (2a), temperature measurement signals (S9) of a temperature detector (34) for detecting an ambient temperature and/or a rain detector and/or a vehicle surroundings detection system based on a camera for detecting fog, snow or rain.

4. Method according to one of the preceding claims,
**characterized in that** the data relating to frictional conditions ($\mu$) or adhesion conditions comprises navigation signals (S7) composed of map data and global position data of a GPS,
wherein the navigation signals (S7) contain: data relating to the route section and/or relating to positive gradients and/or relating to bends and/or relating to a roadway status and/or relating to current frequenting of the route section lying ahead.

5. Method according to one of the preceding claims,

**characterized in that** the data relating to frictional conditions ($\mu$) or adhesion conditions comprises: data signals or measurement signals relating to a status of the tire surface (3a, 4a), for example brake lining wear signals and/or data relating to previous distance traveled and/or data relating to the previous braking performance of the wheels (4, 3).

6. Method according to one of the preceding claims,
   **characterized in that** during the decision (St3) as to which pressure distribution is to be set, a currently determined coefficient of friction ($\mu$) is compared with at least one threshold ($\mu$1), wherein
   if the coefficient of friction ($\mu$) undershoots a first threshold ($\mu$1), a grip-pressure distribution (RP) is set, and
   if the coefficient of friction ($\mu$) exceeds the first threshold ($\mu$1) or a further threshold, a brake wear-pressure distribution (BVP) is set.

7. Method according to Claim 6, **characterized in that** the at least one threshold ($\mu$1) is determined and defined as a function of the route lying ahead.

8. Method according to one of the preceding claims,
   **characterized in that** in a pure grip-pressure distribution (RP) the brakes (10) of an axle (HA)
   to which a relatively high axle load is applied have a higher brake pressure applied to them than in a pure brake lining wear-pressure distribution,
   and
   in a pure grip-pressure distribution (RP) the brakes (8) of an axle (VA) to which a relatively light axle load is applied have a lower brake pressure applied to them than in a pure brake lining wear-pressure distribution.

9. Method according to one of the preceding claims,
   **characterized in that**, before the initiation of the braking, a brake pressure distribution is determined between axles and/or wheels by determining a pure grip-pressure distribution (RP) and a pure brake lining wear-pressure distribution and subsequent formation of mean values from the two pressure distributions for at least central grip ranges.

10. Method according to Claim 9, **characterized in that** the mean values are formed by a linear function, a step function or a non-linear, continuously differentiable function.

11. Method according to one of the preceding claims,
    **characterized in that**, before the initiation of the braking as a function of the current coefficient of friction ($\mu$) which is determined, classification into more than two classes is carried out, wherein the classes contain different proportions of a grip-pressure distribution (RP) and a brake wear-pressure distribution (BVP), and in a class with a higher proportion of a grip-pressure distribution (RP) and an axle (HA) to which a relatively high axle load is applied, a higher brake pressure is set than in a class with a relatively low proportion of a grip-pressure distribution (RP).

12. Method according to Claim 11, **characterized in that** ambient conditions are classified into more than two classes, and a proportion of brake pressure acting on the brakes (10) of an axle (HA) to which a heavy axle load is applied is changed as a function of the classification.

13. Control device (6) for a vehicle brake system (5), in particular for carrying out a method according to one of the preceding claims,
    wherein the control device (6) picks up braking request signals (S5, S), determines a distribution of the brake pressure and sets control signals (S1, S2) for setting brake pressures at wheels (8, 10) on axles (VA, HA) and/or wheels (3, 4) of the vehicle (1),
    wherein, when the braking request signal (S5, S6) is present before the braking is initiated, it is decided whether, or to what extent, the brake pressure is distributed in a brake wear-pressure distribution system (BVP) or in a grip-pressure distribution system (RP) for the subsequent initiation of the braking,
    **characterized in that**
    when the braking request signal (S5, S6) is present before the braking is initiated, the control device (6) picks up current data relating to frictional conditions ($\mu$) or adhesion conditions between a roadway surface (2a) and tire surfaces (3a, 4a) of the vehicle (1) and decides which brake pressure distribution takes place.

14. Brake system (5) for a vehicle (1) which has a control device (6) according to Claim 13, brakes (8, 10) at wheels (3) of a front axle (VA) and wheels (4) of a rear axle (HA), wheel speed sensors (14, 15) for measuring the wheel speeds and valves (12, 9) for modulating the brake pressure in the wheel brakes (8, 10),

wherein the control device (6) picks up braking request signals (S5, S6) from a brake value signal transmitter (18) and/or a vehicle dynamics control device (20) and determines the brake activation operations at the brakes (8, 10) on the basis of the picked-up braking request signals and outputs brake control signals (S1, S2) to the valves (12, 9).

**15.** Vehicle (1) having a brake system (5) according to Claim 14.

**Revendications**

**1.** Procédé de commande ou de régulation du système de freinage (5) d'un véhicule,
dans lequel, lorsqu'un signal (S5, S) d'intention de freinage est présent, des pressions de freinage sont établies sur des freins (8, 10) d'essieux (VA, HA) et/ou de roues (3, 4) du véhicule (1) au moyen d'un procédé de répartition de la pression de freinage et
dans lequel, lorsque le signal (S5, S6) d'intention de freinage est présent, avant le lancement du freinage, il est décidé si et dans quelle mesure la répartition de la pression de freinage en vue du lancement ultérieur du freinage s'effectue dans une répartition de pression (BVP) basée sur l'usure des freins ou dans une répartition de pression (RP) basée sur le coefficient de frottement,
**caractérisé en ce que**
la décision concernant la répartition de la pression de freinage est prise en se basant sur des données effectivement reçues ou détectées concernant les conditions de frottement ($\mu$) ou les conditions de correspondance mécanique entre la surface (2a) de la chaussée et la surface (3a, 4a) des bandages de roues du véhicule (1).

**2.** Procédé selon la revendication 1, **caractérisé en ce qu'**avant l'introduction du freinage, la répartition de la pression de freinage est déterminée par l'une des possibilités suivantes :

a) sur la base d'une répartition de pression (BVP) basée sur l'usure des garnitures de freins,
b) sur la base d'une répartition de pression (RP) basée sur le coefficient de frottement,
c) sur la base à la fois d'une répartition de pression (BVP) basée sur l'usure des garnitures de freins et sur une répartition de pression (RP) basée sur le coefficient de frottement.

**3.** Procédé selon les revendications 1 ou 2,
**caractérisé en ce que** les données concernant les conditions de frottement ($\mu$) ou les conditions de correspondance mécanique comprennent un ou plusieurs des signaux de mesure suivants :

les signaux de mesure (S8) de la chaussée par un détecteur (30) de chaussée qui détecte la surface (2a) de la chaussée,
les signaux (S9) de mesure de température d'un détecteur de température (34) qui détecte la température ambiante, d'un détecteur de pluie et/ou d'un système de saisie de l'environnement du véhicule basé sur caméras détectant le brouillard, la neige ou la pluie.

**4.** Procédé selon l'une des revendications précédentes, **caractérisé en ce que** les données concernant les conditions de frottement ($\mu$) ou les conditions de correspondance géométrique comprennent des signaux de navigation (S7) provenant de données de cartographie et de données globales de position d'un GPS,
les signaux de navigation (S7) contenant :

des données concernant le parcours, les pentes, les virages, l'état de la chaussée et/ou le trafic actuel en avant du parcours.

**5.** Procédé selon l'une des revendications précédentes, **caractérisé en ce que** les données concernant les conditions de frottement ($\mu$) ou les conditions de correspondance géométrique comprennent :

des signaux de données ou de mesures de l'état de la surface (3a, 4a) des bandages de roues, par exemple des signaux d'usure des garnitures de frein, des données concernant le roulage antérieur et/ou des données concernant la capacité de freinage des roues (4, 3) jusque là.

**6.** Procédé selon l'une des revendications précédentes, **caractérisé en ce que** lors de la décision (St3) de la répartition de freinage qui doit être établie, une valeur ($\mu$) du frottement déterminé à cet instant est comparée à au moins un seuil ($\mu$1) et

au cas où la valeur de frottement (μ) n'atteint pas un premier seuil (μ1), une répartition de pression (RP) basée sur le coefficient de frottement est établie et

au cas où la valeur du frottement (μ) dépasse le premier seuil (μ1) ou un autre seuil, une répartition de pression (BVP) basée sur l'usure des freins est établie.

7. Procédé selon la revendication 6, **caractérisé en ce que** le ou les seuils (μ1) sont déterminés et définis en fonction du parcours antérieur.

8. Procédé selon l'une des revendications précédentes, **caractérisé en ce que** dans une répartition de pression (RP) basée purement sur le coefficient de frottement, une pression de freinage plus élevée est appliquée sur les freins (10) d'un essieu (HA) sollicité par une charge plus élevée que dans une répartition de pression basée purement sur l'usure des garnitures de freins, et **en ce que** dans une répartition de pression (RP) basée purement sur le coefficient de frottement, une pression de freinage plus basse est appliquée sur les freins (8) d'un essieu (VA) sollicité par une charge plus légère que dans une répartition de freinage basée purement sur l'usure des garnitures de freins.

9. Procédé selon l'une des revendications précédentes, **caractérisé en ce qu'**avant le lancement du freinage, une répartition de la pression de freinage entre les essieux et/ou entre les roues est déterminée en déterminant une répartition de pression (RP) basée purement sur le coefficient de frottement et une répartition de pression basée purement sur l'usure des garnitures de freins, en formant ensuite des valeurs moyennes des deux répartitions de pression au moins pour des plages moyennes de coefficient de frottement.

10. Procédé selon la revendication 9, **caractérisé en ce que** les valeurs moyennes sont formées par une fonction linéaire, une fonction en gradins ou une fonction non linéaire différentiable de manière continue.

11. Procédé selon l'une des revendications précédentes, **caractérisé en ce qu'**avant le lancement du freinage, en fonction de la valeur actuelle déterminée pour le coefficient de frottement (μ), une classification en plus de deux classes est réalisée, les classes contenant différentes parties d'une répartition de pression (RP) basée sur le coefficient de frottement et une répartition de pression (BVP) basée sur l'usure des freins, et dans une classe présentant une proportion plus élevée de répartition de pression (RP) basée sur le coefficient de frottement, une pression de freinage plus élevée est établie sur un essieu (HA) sollicité par une plus forte charge que dans une classe présentant une proportion plus basse de répartition de pression (RP) basée sur le coefficient de frottement.

12. Procédé selon la revendication 11, **caractérisé en ce que** les conditions ambiantes sont classées en plus de deux classes et, en fonction de la classification, une proportion de pression de freinage est modifiée sur les freins (10) d'un essieu (HA) sollicité par une charge plus lourde.

13. Dispositif de commande (6) pour un système (5) de freinage de véhicule, en particulier en vue de la mise en oeuvre d'un procédé selon l'une des revendications précédentes,

le dispositif de commande (6) recevant des signaux (S5, S) d'intention de freinage, déterminant une répartition de pression de freinage et établissant des signaux de commande (S1, S2) en vue d'établir des pressions de freinage sur les freins (8, 10) des essieux (VA, HA) et/ou des roues (3, 4) du véhicule,

dans lequel, lorsque le signal (S5, S6) d'intention de freinage est présent, avant le lancement du freinage, il est décidé si et dans quelle mesure la répartition de la pression de freinage en vue du lancement ultérieur du freinage s'effectue dans une répartition de pression (BVP) basée sur l'usure des freins ou dans une répartition de pression (RP) basée sur le coefficient de frottement,

**caractérisé en ce que**

en cas de présence d'un signal (S5, S6) d'intention de freinage, avant le lancement du freinage, le dispositif de commande (6) reçoit des données actuelles concernant les conditions de frottement (μ) ou les conditions de correspondance mécanique entre la surface de la chaussée (2a) et la surface (3a, 4a) des bandes de roues du véhicule (1) et décide de la répartition de la pression de freinage qui a lieu.

14. Système (5) de freinage pour un véhicule (1) présentant

un dispositif de commande (6) selon la revendication 13,

des freins (8, 10) sur les roues (3) de l'essieu avant (VA) et les roues (4) de l'essieu arrière (HA),

des capteurs (14, 15) de vitesse de rotation de roues qui mesurent la vitesse de rotation des roues et des soupapes (12, 9) qui commandent la pression de freinage appliquée sur les freins (8, 10) des roues,

le dispositif de commande (6) recevant des signaux (5, S6) d'intention de freinage d'un émetteur (18) de valeurs de freinage et/ou d'un dispositif (20) de régulation de la dynamique de roulage et, sur la base des signaux reçus d'intention de freinage, détermine l'actionnement des freins (8, 10) et délivre des signaux (S1, S2) de commande de freins aux soupapes (12, 9).

15. Véhicule (1) doté d'un système de freinage (5) selon la revendication 14.

# Fig. 1

Fig. 2

St0

St1

$S5=1$
$S6=1$

n

y

St2

μ

cl1

St3

St4

cl2

St5

cl3

St6

# Fig. 3

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102008032544 A1
- DE 4326256 C1
- DE 10163678 A1
- DE 102004018088 A1
- DE 102007060858 A1
- EP 1635163 A2
- DE 10126459 C1
- DE 102008034544